Europäisches Patentamt

European Patent Office

Office européen des brevets

(11) Publication number: **0 514 957 A1**

# EUROPEAN PATENT APPLICATION

(21) Application number: **92200976.6**

(22) Date of filing: **03.04.92**

(51) Int. Cl.5: **B64D 11/00, B60R 5/00**

(30) Priority: **24.05.91 US 705123**

(43) Date of publication of application:
**25.11.92 Bulletin  92/48**

(84) Designated Contracting States:
**DE FR GB IT NL**

(71) Applicant: **THE BOEING COMPANY**
**P.O. Box 3707 M.S. 6Y-25**
**Seattle WA 98124-2207(US)**

(72) Inventor: **Whittle, Cornelius R.**
**24831 S.E. Green Vally Road**
**Auburn, WA 98002(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Detachable storage bin system.**

(57)  A detachable stowage bin system for an aircraft or other vehicle. Tracks (14) are secured to the fuselage structure (26, 28) of the aircraft. Rollers (16a, 16b) are attached to stowage bins (12) and engage with longitudinal cavities (40, 42) formed within the tracks. Overhead latches (22) mounted on the tracks secure the rollers within the tracks. The overhead latches are manually releasable to allow the rollers and thus the stowage bins to be detached from the tracks. Outboard couplers (18) attached to the stowage bins engage with outboard latches (20) that are secured to the fuselage structure. The outboard latches are coupled to the overhead latches and operate simultaneously with the overhead latches.

FIG. I.

## Technical Field

The present invention relates to stowage bins for vehicles, and more particularly, to a system for detachably mounting overhead stowage bins within a vehicle, such as an aircraft.

## Background of the Invention

Commercial aircraft are configured differently depending on whether the aircraft is to be used to carry passengers or cargo. Passenger aircraft are typically fitted with a plurality of overhead stowage bins for carry-on baggage. The bins are mounted endwise to the aircraft fuselage structure along either side of the passenger cabin interior. Passenger aircraft also typically include personal service units (PSUs) mounted below the overhead stowage bins for convenient access by seated passengers. PSUs typically include individual passenger safety and convenience devices, such as ventilation air outlets, reading lights, flight attendant call buttons, and oxygen masks. Because they are not needed, cargo aircraft do not include overhead stowage bins and PSUs.

In recent years, It has become common to convert older aircraft initially configured for passenger carrying into aircraft for carrying cargo. More recently, in order to have more flexibility, aircraft companies have requested airplanes that can be rapidly converted from one form (passenger) to another form (cargo) and vice versa.

In conventional aircraft, each overhead stowage bin is secured to the aircraft's fuselage structure by a plurality of turnbuckle rods (e.g., seven), that are fastened to the stowage bin with nuts and bolts secured by lock-wires. To remove a stowage bin from the airplane, the bolts fastening each turnbuckle rod must be separately unfastened. To reinstall the stowage bin, the individual turnbuckle rods must be adjusted in length to accommodate manufacturing variances between individual stowage bins and aircraft fuselage structures, and then must be separately bolted and secured.

Personal service units in conventional passenger aircraft are bolted to the underside of overhead stowage bins and to the fuselage structure. Removal of each PSU requires undoing the bolts and then disconnecting the PSU from the ship's ventilation and electrical systems.

The removal and installation of stowage bins and PSUs during conversion of a conventionally configured aircraft from passenger use to cargo use, and vice versa, is time consuming and, thus, expensive. As a matter of fact the removal and installation of stowage bins and PSUs consumes the majority of of labor, and thus cost, expended in converting an aircraft from one form (e.g., passenger) to another form (e.g., cargo). The present invention is directed to overcoming this disadvantage.

## Summary of the Invention

The present invention provides a detachable stowage bin system for an aircraft or other vehicle. The system includes a track that is securable to the fuselage structure of the vehicle, and an engaging mechanism that is attachable to a stowage bin and engagable with the track. The system further includes a mechanism for securing the engaging mechanism to the track, the securing mechanism being selectively releasable to allow the engaging mechanism, and thus the stowage bin, to be detached from the track.

In a preferred embodiment of the present invention, the engaging mechanism comprises first and second rollers attached to the stowage bin that are insertable into a longitudinal cavity formed In the track. The securing mechanism comprises a first, overhead latch mounted on the track for selectively preventing movement of the rollers within the cavity in the track.

In accordance with a further aspect of the present invention, the overhead latch includes a latch member that is biased to a latched position, in which the rollers are prevented from being removed from the cavity in the track after insertion into the track. The latch member includes a first surface operated on by the rollers during insertion of the rollers into the cavity in the track that moves the latch member from the latched position to an unlatched position. The latch member further includes a second surface operated on by the inserted rollers that urges the latch member toward the latched position. The latch member may be manually moved to the unlatched position to allow removal of the rollers.

In accordance with a still further aspect of the present invention, the stowage bin includes an outboard coupler that is engagable with an outboard latch secured to the fuselage structure. The overhead latch and the outboard latch are operably interconnected by a cable so that when the first latch is moved to the unlatched position, the outboard latch is moved to a corresponding unlatched position to enable insertion of the outboard coupler.

To remove a stowage bin for conversion of the aircraft to a cargo configuration, a mechanic manually operates the overhead latch, thereby moving both the overhead latch and the outboard latch to the unlatched position for removal of the stowage bin.

In accordance with a yet further aspect of the present invention, the system includes personal service units (PSUs) mounted pivotally to the fuselage structure. The PSUs are mounted for pivoting between a usage position, in which the PSUs are suspended below installed stowage bins, and a stowed position, in which the PSUs are folded against the fuselage structure after the stowage bins have been detached. In this manner, the personal service unit may be folded out of the way in a cargo configured aircraft, without the necessity of disconnecting the PSU from the aircraft electrical and ventilation systems.

Brief Description of the Drawings

The foregoing and other features and advantages of the present invention will be better understood from the following detailed description of a preferred embodiment of the invention, when taken in conjunction with the accompanying drawings in which:

FIGURE 1 is a pictorial view of a detachable stowage bin system constructed in accordance with the present invention;

FIGURE 2 is a detailed pictorial view of the track structure, overhead latch, and outboard latch of the detachable stowage bin system of FIGURE 1;

FIGURE 3 is a partial side elevation view of an installed stowage bin showing the track and outboard latch in cross-section;

FIGURE 4 is a partial side elevation view of a stowage bin during installation, with the overhead latch and outboard latch in the unlatched position, and the track and outboard latch shown in cross-section; and

FIGURE 5 is a side elevation schematic view of a detachable stowage bin system constructed in accordance with the present invention including a PSU pivoted upwardly to the stowed position, with the PSU also shown in a usage position and a service position under an installed stowage bin in phantom.

Detailed Description of the Preferred Embodiment

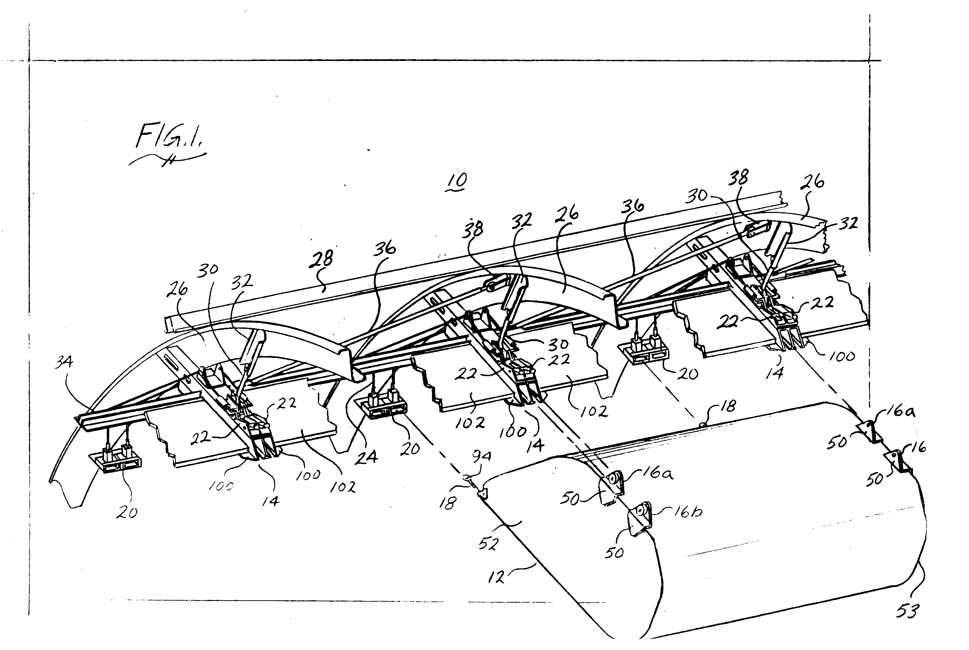

The presently preferred embodiment of a detachable stowage bin system 10 formed in accordance with the invention, is illustrated in FIGURE 1. The system includes a plurality of stowage bins 12, only one of which is illustrated in the drawings, detachably secured to the fuselage structure of an aircraft or other vehicle. To this end, the system includes a plurality of tracks 14 that are secured to the fuselage structure. Each stowage bin 12 includes a plurality of engaging rollers 16a,b attached to the stowage bin that are engagable with the tracks 14.

Each stowage bin 12 further includes two outboard couplers 18 that are engagable with corresponding outboard latches 20 secured to the fuselage structure. Additional overhead latches 22 are mounted on the rails 14. Associated set of overhead latches 22 and outboard latches 20 are each operably connected by a cable 24. When a stowage bin has been installed by inserting the rollers 16a,b into cavities in the tracks 14 and outboard couplers 18 into the outboard latches 20, the overhead and outboard latches 22 and 20 automatically latch to secure the stowage bin in place. The overhead latches 22 are selectively operated to simultaneously release the rollers 16a,b from the tracks 14 and the outboard couplers 18 from the outboard latches 20, allowing detachment of the stowage bin 12.

While the detachable stowage bin system 10 is described herein in terms of an aircraft, it should be understood that the present invention can also be used in other vehicles, such as trains or buses. Referring to FIGURE 1, a fuselage structure of an aircraft typically includes circumferential frame members 26 joined together by longitudinal stringer members 28. The detachable stowage bin system 10 of the invention is used to configure an aircraft for passenger use by securing a plurality of overhead stowage bins 12 within the aircraft along either side of the fuselage structure above the passenger seats. The exact number and configuration of the stowage bins depends on the design of the particular aircraft with which the invention is being used.

As illustrated in FIGURE 1, the outboard end of each track 14 is secured by riveting, lock-bolting or other conventional mechanical fastening to one of the aircraft's circumferential frame members 26. The inboard end of each track 14 projects inwardly, parallel to the passenger deck of the aircraft and parallel to one another. (As used in this application, outboard refers to the direction toward the outer skin of the aircraft's fuselage, while inboard refers to the opposing direction.) The tracks 14 are thus spaced longitudinally within the aircraft's fuselage. For purposes of clarity, as noted above, only one stowage bin 12 is illustrated in FIGURE 1. Adjacent stowage bins are similarly constructed and secured for mounting end to end in a longitudinal series.

The tracks 14 entirely support lateral loads developed by the weight of installed stowage bins 12 and any cargo carried by the bins. In addition to their outboard attachment, the tracks, and, thus the installed stowage bins 12, are supported by vertical support turnbuckle rods 30. The lower end of each turnbuckle rod is pinned to one of the tracks 14 and an upper end is pinned to a bracket 32. The brackets are bolted or otherwise secured to a frame member 26 located above the corresponding track 14. Upon initial construction of the detachable stowage bin system 10, the vertical support tie rods 30 are adjusted to assure proper positioning of the corresponding track 14, after which that position is maintained without the necessity of further adjustment during subsequent installation and removal of the stowage bins.

One end of a longitudinal rail 34 is bolted or otherwise secured to each track 14, with the other end of the rail 34 being secured to the next adjacent track 14, at a point between the outboard and inboard ends of the tracks. Each rail 34 thus spans between a corresponding set of adjacent tracks 14 to provide lateral stability for the tracks 14. One set of longitudinal rails 34 spans substantially the entire length of the passenger cabin on either side of the fuselage. Lateral support is also provided by a series of longitudinal support turnbuckle rods 36 running between the longitudinal rails 34 and the fuselage structure. The lower end of each longitudinal rod 36 is pinned to one of the longitudinal rails 34 adjacent a track 14, while the upper end of the longitudinal rod 36 is pinned to a clevis 38 that is secured overhead on the next adjacent frame member 26. The longitudinal support rods 36 are also adjusted upon initial construction of the detachable stowage bin system 10 to properly position the longitudinal rails 34 and tracks 14, after which further adjustment is unnecessary.

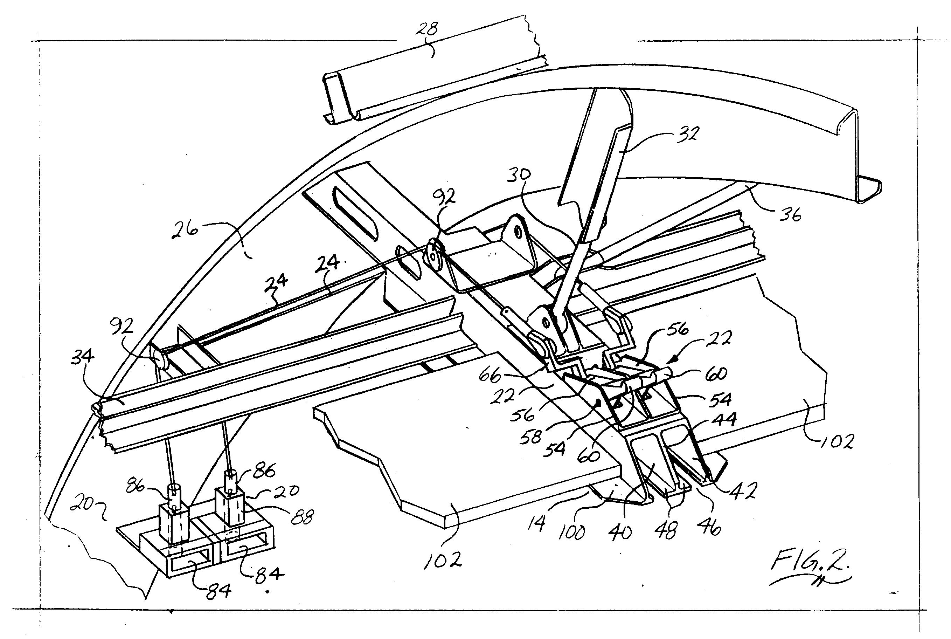

FIGURE 2 illustrates in greater detail the construction of the tracks 14. Each elongated track 14 includes a longitudinal first cavity 40 and a parallel longitudinal second cavity 42. A central partition wall 44 lies between the first and second cavities 40 and 42. A longitudinal slot 46 is formed through the bottom wall of each cavity 40 and 42, defining first and second longitudinal ledges 48 adjacent each side of the partition wall 44.

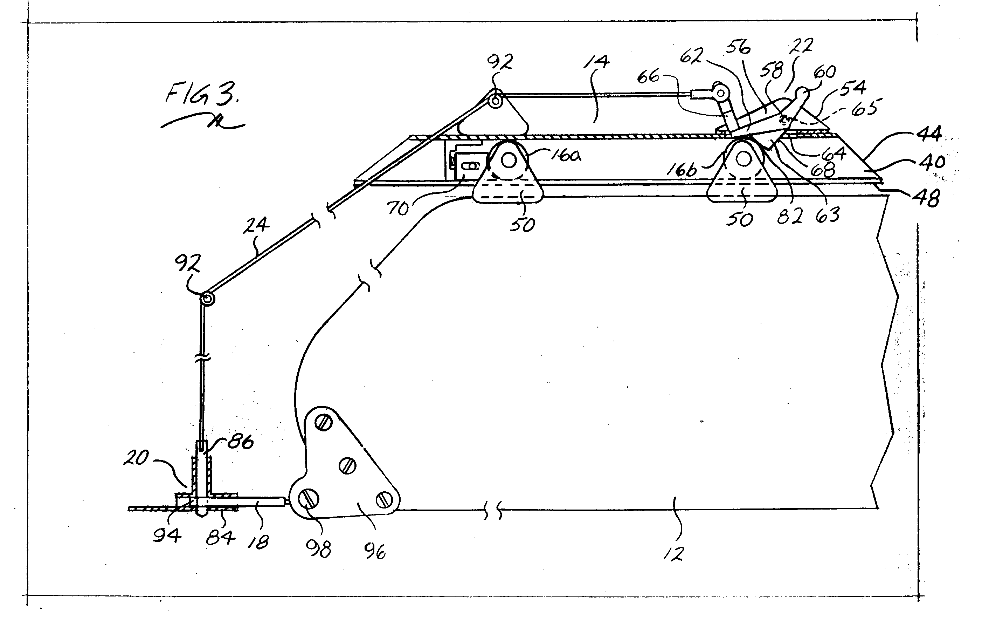

Referring to FIGURE 1, two upwardly projecting spaced-apart Z-shaped brackets 50 are attached to each end 52 of the stowage bin 12. First and second rollers 16a and 16b are rotatably secured to each pair of spaced-apart roller brackets 50, one roller on each bracket. When the stowage bin 12 is installed, the first and second rollers 16a and 16b on a first end 52 of the stowage bin 12 are inserted within the second cavity 42 of a track 14. Simultaneously, the first and second rollers 16a and 16b on the second end 53 of the bin 12 are inserted within the first cavity 40 of the next adjacent track 14. In both tracks 14, the roller brackets 50 pass through the slots 46 formed in the bottom of the cavities 40 and 42, and the rollers 16a and 16b ride on the ledges 48 of the tracks 14, as shown in FIGURE 3.

The construction and operation of the overhead latches 22 will now be described with reference to FIGURES 2 and 3. Two overhead latches 22 are mounted adjacent each other on the upper surface of each track 14. Each latch 22 includes a clevis shaped bracket 54 secured above each of the cavities 40 and 42. A latch member 56 is mounted on a pin 58 running between the sidewalls of each clevis shaped bracket 54. The latch member 56 is a unitary element that includes a handle portion 60, a cam portion 62 and a dog leg portion 66. The handle portion 60 projects upwardly and inboard from the pin 58. The cam portion 62 includes an arm that projects outboard from the pin 58 and a downward protrusion 63 that extends into the corresponding cavity 40 or 42 through a slot 64, formed in the upper wall of the cavity 40 or 42. The dog leg portion 66 lies at the outer end of the arm of the cam portion and projects upwardly.

A coil spring 65 mounted on the pin 58 biases the latch member 56 to a nominal, latched position, wherein the protrusion 63 of the cam portion 62 projects fully downwardly into the corresponding slot 40 or 42. The latch member 56 is rotatable, clockwise as viewed in FIGURE 3, against the spring force to an unlatched position, in which the protrusion 63 is pivoted out of the cavity 40 or 42.

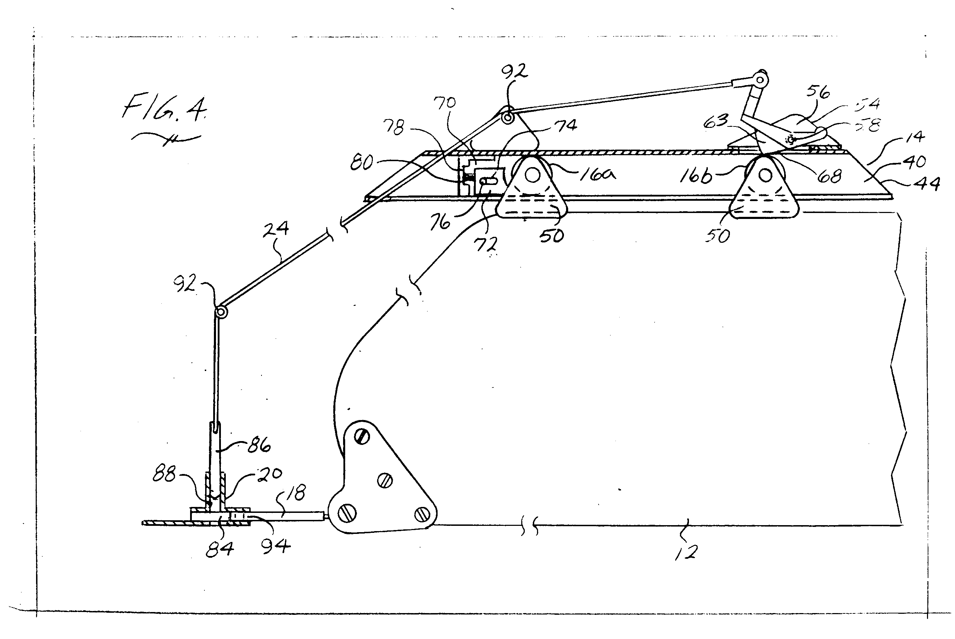

FIGURE 4 best illustrates the insertion of the rollers 16a and 16b into the track 14. FIGURE 4 shows rollers 16a and 16b being inserted into the cavity 40 of the track 14. It is to be understood that the track 14 and latch 26 operate the same for the other cavity 42, which is the mirror image of cavity 40. As the first and second rollers 16a and 16b are inserted into the cavity 40 of the track 14, each roller in turn pushes against a leading surface 68 of the protrusion 63 of the cam portion 62 of the latch member 56. The roller pushes the latch member 56, causing the latch member to rotate about the pin 58 and the protrusion to be withdrawn from the cavity 40.

A spring-loaded stop assembly 70 is mounted at the outboard end of each longitudinal cavity 40,42 of the tracks 14. Each stop assembly 70 includes a stop block 72 that defines a slot 74 having a longitudinal axis oriented parallel to the longitudinal axis of the related cavity 40,42. A pin 76 is press fit into a stop housing 78 and projects inwardly into a inboard opening cavity formed by the housing 78. The pin 76 is received within the slot 74 of the stop block 72 to delimit the sliding motion of the block 72 within the housing 78. A coil spring 80 is disposed between the outboard end of the block 72 and an inside wall of the cavity of the housing 78 to bias the block 72 inboard within the cavity of the housing 78. Each stop assembly 70 is inserted within the related cavity 40,42 of the track 14, and is secured in proximity to the outboard end of the cavity 40,42 by fasteners (not shown) that connect tabs (also not shown) included on the outside of the stop housing 78 to the track 14.

When the stowage bin 12 is fully installed, the first roller 16a contacts and compresses the coil spring 80 of the stop assembly 70, as shown in FIGURE 3. In the installed position, the second roller 16b is located past the location of the downward protrusion 63 of the cam portion 62 of the latch member 56. As a result, the latch member 56 pivots under the force of the spring 63 into the latched position. In the latched position, the downward protrusion projects into the first cavity 40. The force produced by the coil spring 80 of the compressible stop assembly 70 acting on the first roller 16a urges the second roller 16b against an outboard cam surface 82 of the protrusion 63 of the cam portion 62 of the latch member 56. The outboard cam surface 82 defines an arcuate plane, positioned and sized such that the force of the second roller 16b on the cam surface 82 urges the latch member 56 toward the latched position. Thus, the stowage bin 12 remains securely installed until the latch member 56 is manually moved to the unlatched position, by depressing the handle portion 60. More specifically, when the handle portion is depressed, the protrusion 63 of the cam portion 62 moves upwardly, out of the first cavity 40. This action permits the first and second rollers 16a and 16b to slide out of the first cavity 40, as shown in FIGURE 4.

The detachable stowage bin system 10 also includes outboard latches 20 for further securing the stowage bins 12 in place. Referring to FIGURE 2, two outboard latches 20 are secured side by side to each frame member 26 below the corresponding track 14. A spring-loaded pull pin 86 is mounted through a vertical passage 88 in the housing of each outboard latch 20. The spring-loaded pin 86 is biased to normally project downwardly into a cavity 84 of the associated outboard latch 20. The pin 86 is designed to be pulled upwardly against a spring force from the downward, latched position to an upward, unlatched position. In the unlatched position, the pin 86 is withdrawn clear of the cavity 84.

Referring to FIGURE 3, two outboard couplers 18 are mounted on each detachable bin 12. The outboard couplers are mounted on brackets 96, secured to the ends 52 and 53 of the stowage bins by pins 98. Each outboard coupler 18 is able to pivot slightly upwardly and downwardly about the pin 98. Upward and downward movement is limited by stop abutments (not shown) formed on the inner side of the bracket 96. The upward and downward movement facilitates alignment of the outboard couplers 18 with corresponding outboard latches 20. The outer ends of the outboard couplers include a ball filling 94 having a hole sized to receive the corresponding pull pin 86 when the outer end of the coupler is inserted into the cavity 84 in the outboard latch 20. The pivoting adjustability of the outboard couplers 18, together with the compressible stop assemblies 70 mounted within the cavities 40 and 42 of the tracks 14, accommodate slight manufacturing variations between stowage bins. As a result, any stowage bin may be mounted on any set of tracks 14.

Referring to FIGURES 2 through 4, the dog leg portion 66 of each latch member 56 is connected to one end of a cable 24. Each cable 24 passes over two support pulleys 92, mounted on the corresponding track 14 and the longitudinal rail 34. The second end of each cable 24 is secured to the spring-loaded pull pin 86 of an outboard latch 20 that is aligned with the related latch member 56. Referring to FIGURE 4, when the latch member 56 is moved to the unlatched position, the connected cable 24 pulls the pull pin 86 to a corresponding unlatched position. The parts are positioned such that during installation of a stowage bin 12, the outer end of the outboard coupler 18 is inserted into the outboard latch cavity 84 as the second roller 160 passes beneath the latch member 56 of the corresponding track 14. As a result of the rotation of the latch member 56, when the second roller 16b pushes the protrusion 63 of the cam portion 62 upwardly, the pull pin 86 is raised. When the overhead latch member 56 thereafter returns to the latched position, the pull pin 86 moves downwardly to its latched position. In the latched position, the pull pin 86 projects into the cavity 84 of the outboard latch 20, and through the ball fitting 94 secured to the outboard end of the corresponding outboard coupler 18.

In summary, to install a stowage bin 12, two mechanics hold the two ends of the bin and insert the rollers 16a and 16b into the longitudinal cavity 40 or 42 of the corresponding track 14. The corresponding overhead latch 20 and outboard latch 22 automatically move to their unlatched positions as the rollers move beneath latch members 56 during installation. After installation, the overhead and outboard latches return to their latched positions to secure the stowage bin 12 in place.

To remove the stowage bin, each of two mechanics depress the handle portion 60 of the overhead latch member 56 located on one side of the stowage bin to be removed. This action releases both the overhead latches 22 and outboard latches 20, permitting detachment of the stowage bin 12. Either installation or removal of a stowage bin in a system constructed in accordance with the present invention takes approximately less than one minute. In contrast, installation or removal of conventionally secured stowage bins takes approximately 30 minutes per bin.

Referring again to FIGURE 1, each track 14 includes two longitudinal horizontal flanges 100, projecting from either side of the track 14. The flanges 100 support plates 102 that span from the flange 100 of one track 14 to the facing flange 100 of the next adjacent track 14. The plates 102 provide support for ceiling panels (not shown) and indirect lighting fixtures (also not shown) within the passenger cabin.

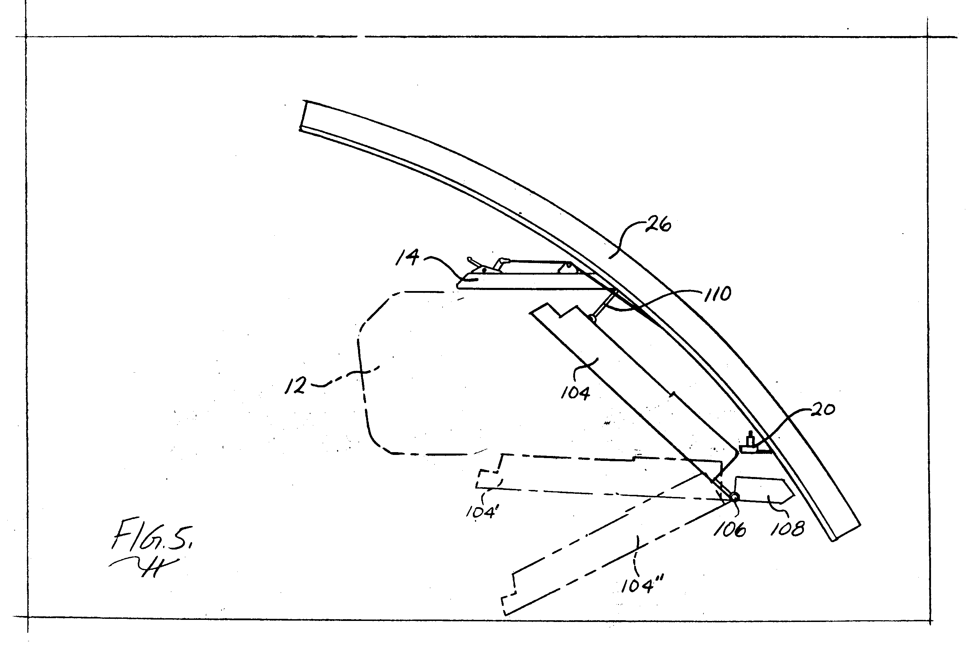

A further aspect of the present invention is illustrated in FIGURE 5. Aircraft configured for carrying passengers typically include personal service units (PSUs) mounted below the overhead stowage bins. The PSUs 104 each include a housing that contains passenger safety and convenience devices, as previously described. To prevent the necessity of disconnecting PSUs 104 from the aircraft electrical and ventilation systems and removing them, the PSUs are pivotally mounted. More specifically, each PSU 104 is mounted on a hinge 106 attached to a support member 108 connected to the fuselage structure. When a stowage bin 12 is installed, the PSU 104 is first pivoted downwardly to a service position where the PSU projects downwardly below the stowage bin position, shown in phantom as PSU 104'' in FIGURE 5. After installation of the stowage bin 12, the PSU is pivoted partially upwardly to a usage position shown as PSU 104' in FIGURE 5, wherein the PSU is suspended below the stowage bin. When the stowage bins 12 are removed during conversion of the aircraft to a cargo configuration, the PSUs 104 are folded upwardly against the fuselage structure (solid line PSU 104 in FIGURE 5), and secured by latches 110. The thusly stowed PSUs need not be disconnected from the aircraft electrical and ventilation systems during installation and removal of stowage bins or cargo usage of the aircraft.

The detachable stowage bin system of the present invention has been described in terms of a preferred embodiment. However, one of ordinary skill, after reading the forgoing specification, will be able to affect various changes, alterations and substitutions of equivalents without departing from the broad concepts disclosed. It is therefore intended that the scope of letters patent granted hereon be limited only by the definition contained in the appended claims and the equivalents thereof.

## Claims

1. A detachable stowage bin system system for an aircraft or other vehicle having a fuselage structure, comprising:

   a track suitable for being secured to a fuselage structure;

   a stowage bin;

   engaging means, suitable for attachment to the stowage bin, for engaging with the track; and

   securing means for securing the engaging means to the track, the securing means being selectively releasable to allow the engaging means, and thus the stowage bin attached to the engaging means, to be detached from the track.

2. The system of Claim 1, wherein:

   the track is elongate and includes a longitudinal cavity;

   the engaging means comprises at least a first roller that is insertable into the longitudinal cavity in the track; and

   the securing means comprises a first latch mounted on the track for selectively preventing movement of the first roller in the cavity in the track.

3. The system of Claim 2, wherein the first latch comprises:

   a first latch member movable between a latched position, in which the first latch member extends into the track to prevent the first roller from being removed from the cavity in the track after being inserted into the cavity, and an unlatched position in which the first roller may be removed from the cavity in the track; and

   first means for biasing the first latch member to the latched position.

4. The system of Claim 3, wherein the first latch member is constructed and contoured to define a first surface operated on by the first roller during insertion of the first roller into the cavity in the track to move the first latch member from the latched position to the unlatched position.

5. The system of Claim 4, wherein:

   the engaging means further comprises a second roller that is insertable into the longitudinal cavity in the track; and

   the first latch member is further constructed and contoured to define a second surface operated on by the second roller after the first and second rollers are inserted into the cavity in the track and the first latch member is in the latched position, to urge the first latch member toward the latched position.

6. The system of Claim 5, further comprising a compressible stop disposed within the cavity in the track, the stop being compressed by the first roller when the first roller is fully inserted into the cavity in the track.

7. The system of Claim 2, wherein the securing means further comprises:

   an outboard coupler suitable for attachment to the stowage bin; and

a second latch suitable for being secured to the fuselage structure and selectively engagable with the outboard coupler when the outboard coupler is attached to the stowage bin.

8. The system of Claim 7, further comprising means for operably interconnecting the first latch with the second latch.

9. The system of Claim 8, wherein the means for operably interconnecting comprises a cable, movement of the first latch member between the latched and unlatched positions being transferred by the cable to the second latch to move the second latch between corresponding positions.

10. The system of Claim 1, wherein the securing means comprises:

an outboard coupler suitable for attachment to the stowage bin; and

an outboard latch suitable for being secured to the fuselage structure and selectively engagable with the outboard coupler when the outboard latch is secured to the fuselage structure and the outboard coupler is attached to the stowage bin.

11. The system of Claim 10, wherein the securing means further comprises means for mounting the outboard coupler to the stowage bin so as to allow limited pivotal movement of the outboard coupler relative to the outboard latch to facilitate alignment of the outboard coupler with the outboard latch.

12. The system of Claim 1, further comprising:

a personal service unit for housing passenger safety and convenience devices; and

means mounting the personal service unit to the fuselage structure for pivoting movement between a usage position, in which the personal service unit is suspended below the secured stowage bin, and a stowed position, in which the personal service unit is folded against the fuselage structure after the stowage bin has been detached.

13. A detachable stowage bin system for an aircraft or other vehicle having a fuselage structure, comprising:

a plurality of stowage bins;

a plurality of tracks, each track having an outboard end suitable for being secured to a fuselage structure;

at least one longitudinal rail secured to each track at a point between the outboard end of the track and an Inboard end of the track to interconnect adjacent tracks;

a plurality of engaging means, suitable for attachment to the stowage bins, for engaging with the tracks when the engaging means are attached to the stowage bins and the tracks are secured to the fuselage structure to mount the stowage bins to the tracks; and

a plurality of securing means for securing the engaging means to the tracks, the securing means being selectively releasable to allow the corresponding engaging means, and thus the stowage bin attached to that engaging means, to be detached from the corresponding track.

14. The system of Claim 13, further comprising a plurality of vertical support members connected between the fuselage structure and at least one of the longitudinal rail and the tracks.

15. The system of Claim 13, further comprising a plurality of longitudinal support members connected between the fuselage structure and at least one of the longitudinal rail and the tracks.

16. The system of Claim 13, wherein:

the engaging means includes at least a first roller and a second roller mounted on a first end and a second end, respectively, of each stowage bin; and

each track is elongate and includes parallel first and second longitudinal cavities, the first cavity of each track receiving the first roller of the first end of a stowage bin and the second cavity of each track receiving the second roller of the second end of an adjacent stowage bin.

17. A detachable stowage bin system for an aircraft or other vehicle having a fuselage structure, comprising:

a stowage bin;

longitudinal support means connectable to the stowage bin for transferring longitudinal stowage bin loads to the fuselage structure;

vertical support means connectable to the stowage bin for transferring vertical stowage bin loads to the fuselage structure;

lateral support means connectable to the stowage bin for transferring lateral stowage bin loads to the fuselage structure; and

means for simultaneously disconnecting the longitudinal support means, vertical support means and lateral support means from the stowage bin to detach the stowage bin from the fuselage structure.

18. A detachable stowage bin system for an aircraft or other vehicle having a fuselage structure, comprising:

a plurality of stowage bins;

means for detachably securing the stowage bins to the fuselage structure;

a plurality of personal service units for housing passenger safety and convenience devices; and

means mounting the personal service units to the fuselage structure for pivoting movement between a usage position, in which the personal service units are suspended below the secured stowage bins, and a stowed position, in which the personal service units are folded against the fuselage structure after the stowage bins have been detached.

FIG.1.

FIG. 2.

FIG 3.

FIG. 4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 700 199 (MATUSKA)<br>* column 1, line 26 - line 35 *<br>--- | 1 | B64D11/00<br>B60R5/00 |
| A | EP-A-0 279 620 (AIR INTERNATIONAL INC)<br>* column 4, line 20 - line 28 *<br><br>----- | 1 | |

**TECHNICAL FIELDS SEARCHED (Int. Cl.5)**

B64D
B60R
B61D

The present search report has been drawn up for all claims

| Place of search | Date of completion of the search | Examiner |
|---|---|---|
| THE HAGUE | 31 AUGUST 1992 | HAUGLUSTAINE H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P0403)